# EUROPÄISCHE PATENTANMELDUNG

(11) **EP 1 103 746 A1**
(43) Veröffentlichungstag der Anmeldung: **30.05.2001**
(21) Anmeldenummer: 99123203.4
(22) Anmeldetag: 25.11.1999
(51) Int. Cl.: F16J 15/44

(54) **Wellendichtung**

(71) Anmelder: SIEMENS AKTIENGESELLSCHAFT, 80333 München (DE)
(72) Erfinder: Brunnstein, Helmut, 45739 Oer-Erkenschwick (DE)

(57) **Zusammenfassung**

Bei einer Wellendichtung (1), insbesondere für die Welle (2) eines gasgekühlten Generators, ist ein Dichtungsring (4) in einer Ringnut (5) eines Dichtungshalters (3) unter Bildung eines gasseitigen Axialspaltes (6) und eines luftseitigen Axialspaltes (7) sowie eines zwischen dem Nutboden (8) der Ringnut (5) und der Ringaußenseite (9) des Dichtungsrings (4) vorgesehenen Ölaufnahmekammer (10) angeordnet. Um eine Vermischung von mit Gas (H₂) einerseits und mit Luft andererseits angereichertem Dichtöl (DI' bzw. DI) möglichst zuverlässig zu verhindern, ist eine im Dichtungshalter (3) gehaltene und den gasseitigen Axialspalt (6) überdeckende Dichtbandage (12a,12b) vorgesehen, die sich in eine zum gasseitigen Axialspalt (6) hin offene Aufnahmenut (14a,14b) im Dichtungsrings (4) erstreckt. Vorzugsweise ist auch der luftseitige Axialspalt (7) mittels einer entsprechenden Dichtbandage (13a,13b) überdeckt.

## Beschreibung

Die Erfindung bezieht sich auf eine Wellendichtung, insbesondere für die Welle eines gasgekühlten Generators, mit einem Dichtungsring, der in einer Ringnut eines Dichtungshalters unter Bildung eines gasseitigen Axialspaltes und eines luftseitigen Axialspaltes sowie eines zwischen dem Nutboden der Ringnut und der Ringaußenseite des Dichtungsrings vorgesehenen Ölaufnahmekammer angeordnet ist.

Eine derartige Wellendichtung ist beispielsweise bekannt aus der DE 37 23 729 C2. Diese in Scheibenbauweise ausgeführte Wellendichtung gewährleistet eine dichte Durchführung einer rotierenden Welle durch ein mit Gas unter vorgegebenem Druck gefülltes Gehäuse, insbesondere eines mit Wasserstoff gekühlten Generators. Dazu ist ein Dichtungsring zwischen einer Führungsplatte und einem über Stehbolzen mit dieser verbundenen Entlastungsflansch gehalten. In dieser zweischaligen Hal-terungsausführung sitzt die Wellendichtung im eingebauten Zustand derart auf der Welle, dass die Führungsplatte dem Gehäuse zugewandt und damit auf der Gasseite des Dichtungsrings angeordnet ist, während der Entlastungsflansch auf der sogenannten Luftseite des Dichtungsrings liegt.

Aus der EP 0 043 860 B1 sowie aus der WO 97/21948 sind darüber hinaus Ausführungsformen einer derartigen Wellendichtung mit einem gehäuseartigen Dichtringhalter in ein- oder zweiteiliger Ausführung bekannt. Dabei weist der Dichtungshalter eine zur Welle hin offene Ringnut auf, in die der Dichtungsring unter Bildung eines gasseitigen sowie eines luftseitigen Axialspaltes eingelegt ist. Zwischen dem Nutboden der Ringnut des Dichtungshalters und der Ringaußenseite des Dichtungsrings ist eine Ölaufnahmekammer gebildet, die im Montage- und Betriebszustand mit Dichtöl beaufschlagt ist.

Bei allen Ausführungsformen einer derartigen Wellendichtung schwimmt zur Abdichtung der rotierenden Welle der Dichtungsring auf einem Ölfilm, der durch Zuführen des Dichtöls in den zwischen dem Dichtungsring und der Welle gebildeten Radialspalt erzeugt wird. Bei der Ausführung mit der genannten Ölaufnahmekammer steht diese mit einer Durchgangsbohrung im Dichtungsring in Verbindung, die an der der Welle zugewandten Ringinnenseite in den Radialspalt einmündet. Um dabei insbesondere eine radiale Beweglichkeit des Dichtungsrings innerhalb dessen Dichtungshalterung zu gewährleisten, werden sowohl der gasseitige als auch der luftseitige Axialspalt zwischen dem Dichtungsring und den diesem zugewandten Flanken des Halters oder der Haltevorrichtung ebenfalls mit Öl beaufschlagt.

Dabei unterscheidet man prinzipiell zwischen einer sogenannten Einflußdichtung und einer sogenannten Doppelflußdichtung, je nachdem ob zur Abdichtung des Radialspaltes und zur Vermeidung eines Gasaustausches zwischen der Gasseite und der Luftseite der Dichtung ein einzelner Druckölkreislauf vorgesehen ist, oder ob zwei Druckölkreisläufe vorgesehen sind. Unabhängig davon ist es jedoch wünschenswert, dass kein oder zumindest nur ein möglichst geringer Anteil von mit Luft angereichertem Dichtöl über die Gasseite der Wellendichtung zum Generator gelangt und sich dort mit dem Kühlmittel, insbesondere mit dem zu Kühlzwecken üblicherweise vorgesehenen Was-serstoff, vermischt. Eine Abtrennung des Dichtöls und/oder des Wasserstoffs aus diesem Gas-/Öl-Gemisch ist mit einem hohen Aufwand verbunden und daher äußerst unerwünscht.

Um ein Vermischen von mit Wasserstoff angereichertem Dichtöl und von mit Luft angereichertem Dichtöl möglichst zu verhindern, ist bei der aus der DE 37 23 729 C2 bekannten Wellendichtung innerhalb des zwischen dem Dichtring und der gasseitigen Flanke des Dichtringhalters gebildeten Axialspalt eine Lippendichtung vorgesehen. Diese liegt in einer entsprechenden Nut der diesem gasseitigen Axialspalt zugewandten Gehäu-seflanke des Dichtringhalters ein. Zur Erhöhung dieses Dicht-effektes ist gemäß der WO 97/21948 eine derartige Ring- oder Lippendichtung mit Drucköl beaufschlagt, dass der Aufnahmenut dieser zusätzlichen Dichtung über eine mit der Ölaufnahmekammer kommunizierenden Stichleitung zugeführt wird. Diese bekannten Maßnahmen sind jedoch einerseits besonders aufwendig und führen andererseits nicht zum gewünschten Erfolg, da eine zuverlässige Abdichtung des gasseitigen Axialspaltes auf diese Weise nicht erzielt wird.

Der Erfindung liegt daher die Aufgabe zugrunde, eine Wellendichtung der eingangs genannten Art anzugeben, bei der unter Vermeidung der genannten Nachteile eine besonders gute Dichtwirkung erzielt wird, insbesondere hinsichtlich einer zuverlässigen Verhinderung oder Vermeidung einer Vermischung von mit Wasserstoff und mit Luft angereichertem Dichtöl.

Diese Aufgabe wird erfindungsgemäß gelöst durch die Merkmale des Anspruchs 1. Dazu ist eine den gasseitigen Axialspalt überdeckende (erste) Dichtbandage vorgesehen, die einerseits im Dichtungshalter gehalten ist, und die sich andererseits in eine zum Axialspalt hin offene (erste) Aufnahmenut im Dichtungsrings erstreckt.

In besonders vorteilhafter Ausgestaltung ist in gleicher Art und Weise der luftseitige Axialspalt mittels einer (zweiten) Dichtbandage überdeckt.

Die Erfindung geht dabei von der Überlegung aus, dass eine Vermischung von mit Wasserstoff angereichertem Dichtöl mit dem mit Luft angereicherten Dichtöl dadurch vermieden oder zumindest verringert werden kann, wenn bereits ein Eindringen von Öl aus der Ölaufnahmekammer zumindest in den gasseitigen Axialspalt zuverlässig verhindert wird. Dazu reicht es jedoch gerade nicht aus, ein zusätzliches Dichtelement entlang des gasseitigen Axialspalts vorzusehen, da dann einerseits zwischen diesem und dem Dichtring weiterhin ein Spalt verbleibt.

Andererseits ist derjenige Bereich des gasseitigen Axialspalts, der zwischen der Ölaufnahmekammer und dieser zusätzlichen Ringdichtung verbleibt, weiterhin mit Öl aus der Ölaufnahmekammer beaufschlagt. Wird jedoch der gasseitige Axialspalt, vorzugsweise möglichst nahe im Bereich dessen Einmündung in die Ölaufnahmekammer, nicht nur abgedeckt, sondern in Axialrichtung vollständig überdeckt, so kann praktisch kein Dichtöl, insbesondere kein mit Luft angereichertes Dichtöl, aus der Ölaufnahmekammer in den gasseitigen Axialspalt gelangen. Diese Sperrwirkung kann dadurch noch verstärkt werden, dass auch der luftseitige Axialspalt vollständig überdeckt wird.

Die oder jede dazu vorgesehene Dichtbandage liegt dabei einerseits in einer zweckmäßigerweise quer zum jeweiligen Axialspalt verlaufenden Haltenut im Dichtungshalter und andererseits in einer ebenfalls quer zum Axialspalt verlaufenden und vorteilhafterweise mit der Haltenut fluchtenden Aufnahmenut ein. Die Haltenut ist in die dem jeweiligen Axialspalt zugewandte Wandflanke des Dichtungshalters eingebracht, während die Aufnahmenut in die diesem Axialspalt zugewandte Wandflanke des Dichtungsrings eingebracht ist.

Durch eine derart gezielte Sperrung des Ölflusses an der Gasseite und an der Luftseite der Wellendichtung wird eine deutlich verbesserte Gas- oder Wasserstoff-Reinheit erzielt. Bezüglich der gasseitigen als auch zweckmäßigerweise der luftseitigen Axialspaltüberdeckung ist vorzugsweise eine redundante Ausführung von Vorteil, indem der jeweilige Axialspalt mit zwei übereinanderliegenden Dichtbandagen überdeckt wird. Der Bandagenabstand zwischen den beiden übereinanderliegenden Dichtbandagen sollte dabei möglichst gering sein.

Durch die gezielte Sperrung eines Ölflusses aus der Ölaufnahmekammer insbesondere in den gasseitigen Axialspalt mittels der Dichtbandage wird zuverlässig verhindert, dass beispielsweise mit Luft angereichertes Dichtöl aus der Ölaufnahmekammer über den gasseitigen Axialspalt in den Radialspalt zwischen der Welle und dem Dichtungsring gelangt. Des Weiteren ist der Einsatz derartiger Dichtbandagen sowohl auf der Gasseite als auch auf der Luftseite des Dichtrings bezüglich einer gewünschten Einschränkung dessen Schwingungsverhaltens von Vorteil. Ferner erfüllen die Dichtbandagen gleichzeitig eine Haltefunktion für den Dichtungsring innerhalb der Ringnut des Dichtungshalters in der jeweiligen Sollposition. Au-ßerdem wird eine Reduzierung der erforderlichen Dichtölmenge erreicht.

In zweckmäßiger Weiterbildung ist der Dichtungsring an dessen dem gasseitigen Axialspalt zugewandten Seite mit einer zu diesem Axialspalt hin offenen Ölaufnahmenut versehen. Diese auf der der Welle zugewandten Unterseite der (ersten) Dichtbandage angeordnete Ölaufnahmenut kommuniziert über den gas-seitigen Axialspalt mit einer im Dichtungshalter vorgesehenen und ebenfalls unterhalb der (ersten) Dichtbandage liegenden Stichleitung, über die vorzugsweise lediglich mit Wasserstoff angereichertes Dichtöl in einem separaten Kreislauf geführt wird. Außerdem kommuniziert diese Ölaufnahmenut mit einem den Dichtungsring durchsetzenden Ölkanal, der auf der der Welle zugewandten Ringinnenseite des Dichtungsrings in den Radialspalt einmündet. Das Dichtöl aus der Ölaufnahmekammer wird zweckmäßigerweise über einen weiteren, den Dichtungsring durchsetzenden Ölkanal geführt, der in den Radialspalt einmündet. Über eine auf der Luftseite der Wellendichtung im Dichtungshalter vorgesehene und in den luftseitigen Axialspalt unterhalb der (zweiten) Dichtbandage einmündende Stichleitung kann zusätzlich Drucköl zur Entlastung des Dichtungsrings in den luftseitigen Axialspalt geführt werden.

Im Bereich zwischen der gasseitigen Stichleitung und der Welle ist zweckmäßigerweise im Dichtungshalter eine den gasseitigen Axialspalt überdeckende dritte Dichtbandage gehalten, die sich in eine zum gasseitigen Axialspalt hin offene dritte Nut des Dichtungsrings erstreckt. In diesem Bereich ist im Dichtungshalter zweckmäßigerweise eine sich zur Gasseite hin erstreckende Radialnut vorgesehen, in der ein an den Dichtring angeformter Dichtringkragen einliegt. Die sich in Axialrichtung erstreckende und die Welle radial umgebende dritte Dichtbandage ist dabei im Nutboden dieser Radialnut gehalten und liegt in der dann im Dichtringkragen eingebrachten dritten Nut ein.

Vorteilhafterweise ist zusätzlich oder alternativ am Übergang von einem den Dichtungsring aufnehmenden Nutschaft zur Ölaufnahmekammer eine die Ringnut des Dichtungshalters gasseitig und luftseitig überragende Radialnut vorgesehen, in der ebenfalls ein in diesem Bereich an den Dichtungsring angeformter Ringkragen einliegt. Die erste und zweite Dichtbandage, die ebenfalls die Welle radial umgeben, überdecken dann zweckmä-ßigerweise den gasseitigen bzw. luftseitigen Axialspalt im Bereich dieses in der Radialnut einliegenden Ringkragens.

Der Dichtungshalter kann einteilig oder zweiteilig ausgeführt sein. Bei einem zweiteilig ausgeführten Dichtungshalter erstreckt sich die Ölaufnahmekammer zweckmäßigerweise bezüglich deren axialer Ausdehnung teilweise in ein gasseitiges erstes Halteteil und teilweise in ein luftseitiges zweites Halteteil. Dabei umfasst das gasseitige Halteteil einen im Vergleich zum luftseitigen zweiten Halteteil großen Anteil der Ölaufnahmekammer, so dass das luftseitige Halteteil eine Dek-kelfunktion hat. Die zweiteilige Ausführung des Dichtungshalters ist gegenüber der einteiligen Ausführungsform insbesondere im Hinblick auf die Montage der Wellendichtung vorteilhaft.

Die mit der Erfindung erzielten Vorteile bestehen insbesondere darin, dass durch den Einsatz zumindest einer zusätzlichen Dichtbandage bei einer die Welle eines gasgekühlten, insbesondere eines mit Wasserstoff gekühlten, Generators abdichtenden Wellendichtung, die einen von der Welle durchsetzten und mit Dichtöl beaufschlagten Dichtungsring aufweist, eine gezielte Sperrung des Ölflusses auf der Gasseite eines Dichtringhalters erzielt wird. Dadurch ist eine Vermischung von mit Wasserstoff und von mit Luft angereichertem Dichtöl vermieden, zumindest jedoch auf ein besonderes geringes Maß verringert. Die Dichtbandage übernimmt, insbesondere in Verbindung mit einer weiteren, auf der Luftseite des Dichtringhalters vorgesehenen Dichtbandage, zudem eine Dämpfungsfunktion hinsichtlich des Schwingungsverhaltens des Dichtungsrings. Außerdem ermöglichen die Dichtbandagen eine besonders einfache und zuverlässige Halterung des Dichtungsrings innerhalb einer Ringnut eines entsprechenden Dichtungshalters.

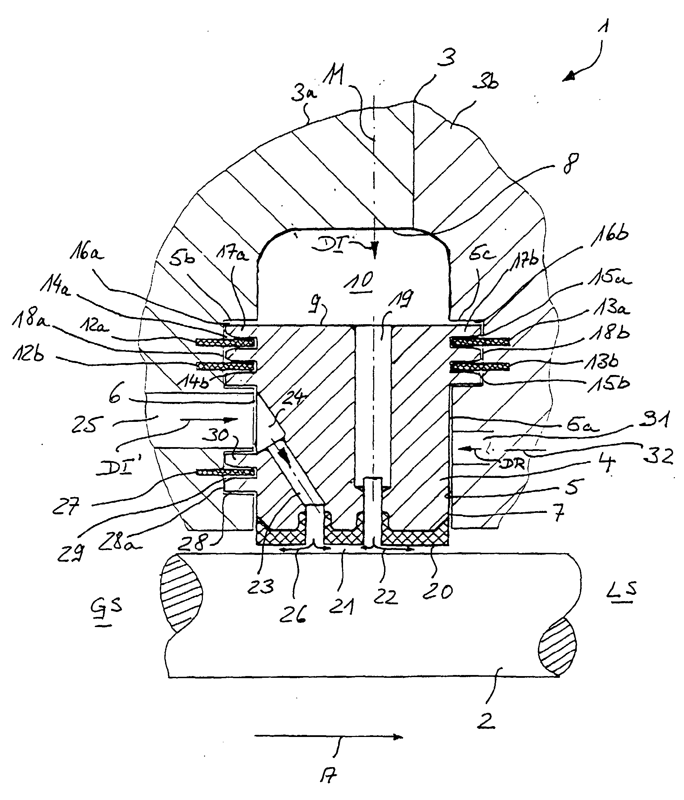

Nachfolgend wird ein Ausführungsbeispiel der Erfindung anhand einer Zeichnung näher erläutert. Darin zeigt die einzige Figur im Ausschnitt eine Wellendichtung mit zusätzlichen Dichtbandagen auf der Gasseite und auf der Luftseite eines Dichtringhalters im Längsschnitt.

Dargestellt ist eine Wellendichtung 1 auf einer Welle 2, die Teil z.B. eines Generators oder Turbogenerators einer Kraft-werksanlage ist. In einem im Ausführungsbeispiel zweiteiligen Dichtungshalter 3 ist ein Dichtungsring 4 angeordnet, der die Welle 2 koaxial umgibt. Dazu weist der Dichtungshalter 3 eine Ringnut 5 auf, in die der Dichtungsring 4 unter Bildung eines gasseitigen ersten Axialspalts 6 und eines luftseitigen zweiten Axialspalts 7 einliegt. Zwischen einem Nutboden 8 der zur Welle 2 hin offenen Ringnut 5 und der der Welle 2 abgewandten Ringaußenseite 9 des Dichtungsrings 4 ist eine im Bereich des Nutbodens 8 gewölbt ausgeführte Ölaufnahmekammer 10 gebildet. In die Ölaufnahmekammer 10 mündet eine im Dichtungshalter 3 vorgesehene Stich- oder Dichtölleitung 11, die in nicht näher dargestellter Art und Weise Teil eines Dichtölkreislaufs ist.

Die dargestellte Wellendichtung 1 ist besonders zur Abdichtung eines mit Wasserstoff (H₂) gefüllten Generatorgehäuses geeignet und weist daher ein Dichtölsystem auf. Ein in der Figur links dargestelltes, gasseitiges erstes Halteteil 3a des Dichtungshalters 3 ist in nicht näher dargestellter Art und Weise mit dem Generatorgehäuse verbunden. Der wesentliche Teil der Ölaufnahmekammer 10 erstreckt sich in dieses gasseitige Halteteil 3a des Dichtungshalters 3. Ein vergleichsweise geringer Teil der Ölaufnahmekammer 10 erstreckt sich in ein mit dem gasseitigen Halteteil 3a deckelartig verbundenes luftseitiges, zweites Halteteil 3b. Über die im Ausführungsbeispiel das gasseitige Halteteil 3a durchsetzende Dichtölleitung 11 wird der Ölaufnahmekammer 10 zunächst neutrales Dichtöl DI zugeführt.

Während das erste Halteteil 3a des Dichtungshalters 3 dem Generatorgehäuse zugewandt ist und somit der erste Axialspalt 6 auf der Gasseite GS des Dichtungsrings 4 liegt, bildet das zweite Halteteil 3b des Dichtungshalters 3 die dem Generatorgehäuse abgewandte Seite der Wellendichtung 1, so dass der zweite Axialspalt 7 auf der sogenannten Luftseite LS des Dichtungsrings 4 liegt.

Im Ausführungsbeispiel ist sowohl über den gasseitigen Axialspalt 6 als auch über luftseitigen Axialspalt 7 ein Ölfluss aus der Ölaufnahmekammer 10 mittels jeweils redundant ausgeführten Dichtbandagen 12a,12b bzw. 13a,13b zuverlässig verhindert. Die radial umlaufenden Dichtbandagen 12,13 überdekken den jeweiligen Axialspalt 6 bzw. 7 vollständig. Dabei ist jede der den gasseitigen Axialspalt 6 überdeckenden Dichtbandagen 12a, 12b einerseits im Halteteil 3a des Dichtungshalters 3 gehalten. Andererseits liegen die sich zumindest annähernd parallel zur Welle 2 erstreckenden und somit in Axialrichtung A verlaufenden Dichtbandagen 12a,12b in jeweils einer im Dichtungsring 4 vorgesehenen (ersten) Aufnahmenut 14a bzw. 14b ein. Analog sind die den luftseitigen Axialspalt 7 überdeckenden Dichtbandagen 13a,13b im Halteteil 3b des Dichtringhalters 3 fixiert und liegen in entsprechenden (zweiten) Aufnahmenuten 15a bzw. 15b im Dichtring 4 ein.

Die Ringnut 5 des Dichtungshalters 3 ist etwa pilzförmig ausgebildet. Am Übergang von einem Nutschaft 5a, innerhalb des-sen sich der Dichtungsring 4 erstreckt, zur Ölaufnahmekammer 10 sind eine zum gasseitigen Axialspalt 6 und eine zum luftseitigen Axialspalt 7 quer verlaufende und in Richtung zur Gasseite GS und zur Luftseite LS weisende Nutschultern 5b bzw. 5c gebildet. Die Nutschultern 5b,5c sind Teil einer in den Dichtungshalter 3 eingebrachten Radialnut 16a, 16b, in der ein Ringkragen 17a bzw.17b des Dichtungsrings 4 einliegt. In diesen Ringkragen 17a,17b sind die Aufnahmenuten 14a,14b bzw. 15a,15b eingebracht, während die Dichtbandagen 12a,12b und 13a,13b im jeweiligen Nutboden 18a,18b der Radialnut 16a bzw. 16b gehalten sind.

Dies ermöglicht einerseits eine zuverlässige Sperrung eines Ölflusses an Dichtöl DI aus der Dichtölkammer 10 in den gas-seitigen Axialspalt 6 und in den luftseitigen Axialspalt 7. Andererseits wird eine bereits allein durch die Dichtbandagen 12,13 erzielte Schwingungsdämpfung des Dichtrings 4 noch durch die Nut- und Kragenkontur 16,17 verbessert. Die Haltewirkung der Dichtbandagen 12,13 hat somit im Wesentlichen auch eine Lage- und Fixierfunktion für den Dichtungsring 4.

Das Dichtungsöl DI wird aus der Ölaufnahmekammer 10 über eine im Ausführungsbeispiel zweckmäßigerweise zumindest annähernd zentrale Dichtöl- oder Durchgangsbohrung 19 im Dichtungsring 4 in einen zwischen der Welle 2 und einer Ringinnenseite 20 gebildeten Radialspalt 21 geführt, wobei die Ringinnenseite 20 die eigentliche Dichtfläche des Dichtungsrings 4 ist. Wie durch den Pfeil 22 angedeutet, fließt das Dichtöl DI innerhalb des Radialspalts 21 entlang der Welle 2 in Richtung zur Luftseite LS der Wellendichtung 1, während nur ein vergleichsweise geringer Anteil des Dichtöls DI zur Gasseite GS fließt.

Dieser üblicherweise mit Luft angereicherte Anteil des Dichtöls DI wird zusätzlich abgeblockt durch mit Gas, insbesondere mit Wasserstoff, angereichertes Dichtöl DI', das ebenfalls entlang der Welle 2 in den Radialspalt 21 geführt ist. Dazu weist der Dichtungsring 4 einen Ölkanal 23 auf, der bezogen auf die Durchgangsbohrung 19 auf der gasseitigen Hälfte des Dichtungsrings 4 durch diesen geführt ist. Dieser Ölkanal 23 zum Durchführen von mit Wasserstoff angereichertem Dichtöl DI' entspringt einer Ölaufnahmenut oder Ölnut 24, die im Bereich des gasseitigen Axialspalts 6 im Dichtungsring 4 vorgesehen ist.

In diese Ölaufnahmenut 24 mündet über den gasseitigen Axialspalt 6 eine im Halteteil 3a des Dichtungshalters 3 vorgesehene Stichleitung oder -bohrung 25 ein. Diese Stichleitung 25 sowie die Ölaufnahmenut 24 und der Ölkanal 23 können Teil eines separaten Dichtölsystems oder auch desselben Dichtölkreislaufs sein, so dass dann eine Doppelflussdichtung bzw. eine Einflussdichtung gebildet ist. Das mit Wasserstoff angereicherte Dichtöl DI' strömt in Richtung des Pfeils 26 zur Gasseite GS der Wellendichtung 1.

Die Dichtbandagen 12a,12b verhindern dabei zuverlässig eine Vermischung von mit Luft angereichertem Dichtöl DI, insbesondere aus der Ölaufnahmekammer 10, mit mit Wasserstoff angereichertem Dichtöl DI', das gasseitig über die Stichleitung 25 und den gasseitigen Axialspalt 6 sowie über den Ölkanal 23 in den Radialspalt 18 einströmt. Eine zwischen der Stichleitung 25 und dem Radialspalt 21 - und somit der Welle 2 - vorgesehene weitere (dritte) Dichtbandage 27 verhindert dabei zusätzlich, dass mit Wasserstoff angereichertes Dichtöl DI' direkt über den gasseitigen Axialspalt 6 in den Radialspalt 21 gelangt.

Diese (dritte) Dichtbandage 27 ist analog einerseits im Nutboden 28a einer Radialnut 28 im Halteteil 3a des Dichtungshalters 3 gehalten. Andererseits liegt diese Dichtbandage 27 wiederum in einer (dritten) Aufnahmenut 29 ein, die in einen unterhalb der Stichleitung 25 an den Dichtring 4 angeformten Dichtringkragen 30 eingebracht ist, der seinerseits in der Radialnut 28 einliegt.

In das luftseitige Halteteil 3b des Dichtringhalters 3 ist im Bereich zwischen den Dichtbandagen 13a, 13b und der Welle 2 eine Radialnut 31 zum Einbringen von Drucköl DR in den luftseitigen Axialspalt 7 vorgesehen. Mittels des Drucköls DR, das über eine im Halteteil 3b vorgesehene und in die Radialnut 31 einmündende Stichleitung 32 in den luftseitigen Axialspalt 7 einbringbar ist, wird der Dichtungsring 4 entlastet.

Die oder jede Dichtbandage 12a,12b und 27 sowie 13a,13b, die den Dichtungsring 4 auf der Gasseite GS bzw. auf der Luftseite LS radial umgibt, kann aus Gummi oder aus einem Gummi-gewebe bestehen. Vorzugsweise besteht die Dichtbandage 12,13,27 aus einem Fluorelastomere auf der Basis von Vinylidenfluorid-Hexafluorpropylen-Copolymerisaten (Viton®). Dabei kann die jeweilige Dichtbandage 12,13,27 z. B. mittels Glas-, Metall- oder Gewebefasern zusätzlich faserverstärkt sein.

## Patentansprüche

1. Wellendichtung, insbesondere für die Welle (2) eines gasgekühlten Generators, mit einem Dichtungsring (4), der in einer Ringnut (5) eines Dichtungshalters (3) unter Bildung eines gasseitigen Axialspaltes (6) und eines luftseitigen Axialspaltes (7) sowie eines zwischen dem Nutboden (8) der Ringnut (5) und der Ringaußenseite (9) des Dichtungsrings (4) vorgesehenen Ölaufnahmekammer (10) angeordnet ist, wobei sich eine im Dichtungshalter (3) gehaltene und den gasseitigen Axialspalt (6) überdeckende erste Dichtbandage (12a,12b) in eine zum gasseitigen Axialspalt (6) hin offene erste Aufnahmenut (14a,14b) im Dichtungsring (4) erstreckt.

2. Wellendichtung nach Anspruch 1,
**gekennzeichnet durch** eine im Dichtungshalter (3) gehaltene und den luftseitigen Axialspalt (7) überdeckende zweite Dichtbandage (13a,13b), die sich in eine zum luftseitigen Axialspalt (7) hin offene zweite Aufnahmenut (15a,15b) des Dichtungsrings (4) erstreckt.

3. Wellendichtung nach Anspruch 1 oder 2,
**dadurch gekennzeichnet**, dass der Dichtungsring (4) an dessen dem gasseitigen Axialspalt (6) zugewandten Seite eine zu diesem hin offene Ölaufnahmenut (24) aufweist, die in den zwischen der Ringinnenseite (20) des Dichtungsrings (4) und der Welle (2) gebildeten Radialspalt (21) einmündet, und die mit einer im Dichtungshalter (3) unterhalb der ersten Dichtbandage (12a,12b) angeordneten Stichleitung (25) kommuniziert.

4. Wellendichtung nach Anspruch 3,
**dadurch gekennzeichnet**, dass im Bereich zwischen der Stichleitung (25) und der Welle (2) im Dichtungshalter (3) eine den gasseitigen Axialspalt (6) überdekkende dritte Dichtbandage (27) gehalten ist, die sich in eine zum gasseitigen Axialspalt (6) hin offene dritte Aufnahmenut (29) des Dichtungsrings (4) erstreckt.

5. Wellendichtung nach Anspruch 4,
**dadurch gekennzeichnet**, dass zwischen der Stichleitung (25) und der Welle (2) im Dichtungshalter (3) eine Radialnut (28) vorgesehen ist, in der eine an den Dichtring (4) angeformter Dichtringkragen (30) einliegt, wobei die im Nutboden (28a) der Radialnut (28) gehaltene dritte Dichtbandage (27) in der im Dichtringkragen (30) vorgesehenen dritten Aufnahmenut (29) einliegt.

6. Wellendichtung nach einem der Ansprüche 1 bis 5,
**dadurch gekennzeichnet**, dass am Übergang von einem den Dichtungsring (4) aufnehmenden Nutschaft (5a) zur Ölaufnahmekammer (10) eine die Ringnut (5) des Dichtungshalters (3) gasseitig und luftseitig überragende Radialnut (16a,16b) vorgesehen ist, in der ein Ringkragen (17a,17b) des Dichtungsrings (4) einliegt.

7. Wellendichtung nach Anspruch 6,
**dadurch gekennzeichnet**, dass die erste Dichtbandage (12a,12b) und die zweite Dichtbandage (13a,13b) den gasseitigen bzw. luftseitigen Axialspalt (6 bzw. 7) im Bereich des in der Radialnut (16a,16b) einliegenden Ringkragens (17a,17b) überdecken.

8. Wellendichtung nach einem der Ansprüche 1 bis 7, **dadurch gekennzeichnet**, dass die oder jede Dichtbandage (12,13,27) aus einem Fluorelastomere auf der Basis von Vinylidenfluorid-Hexafluorpropylen-Copolymerisaten besteht.

9. Wellendichtung nach einem der Ansprüche 1 bis 8, **dadurch gekennzeichnet**, dass ein mit der Ölaufnahmekammer (10) kommunizierender und den Dichtungsring (4) durchsetzender Ölkanal (19) vorgesehen ist, der in den zwischen der Ringinnenseite (20) des Dichtungsrings (4) und der Welle (2) gebildeten Radialspalt (21) einmündet.

10. Wellendichtung nach einem der Ansprüche 1 bis 9, **dadurch gekennzeichnet**, dass zusätzlich zu zumindest der ersten Dichtbandage (12a) eine redundante Dichtbandage (12b) vorgesehen ist.

11. Wellendichtung nach einem der Ansprüche 1 bis 10, **gekennzeichnet durch** eine in den luftseitigen Axialspalt (7) einmündende und mit einer Stichleitung (32) kommunizierenden Radialnut (31) im Dichtungshalter (3) zum Einbringen von Drucköl (DR) in diesen Axialspalt (7).

12. Wellendichtung nach einem der Ansprüche 1 bis 11, **dadurch gekennzeichnet**, dass der Dichtungshalter (3) zweiteilig ausgeführt ist, wobei sich die Ölaufnahmekammer (10) bezüglich deren axialer Ausdehnung teilweise in ein gasseitiges erstes Halteteil (3a) und teilweise in ein luftseitiges zweites Halteteil (3b) erstreckt.
